# DEMANDE DE BREVET EUROPEEN

(11) **EP 0 850 890 A1**
(43) Date de publication de la demande: **01.07.1998**
(21) Numéro de dépôt: 97403131.2
(22) Date de dépôt: 23.12.1997
(51) Int. Cl.: C03B 37/029

(54) **Four de fibrage d'une préforme de fibre optique**

(30) Priorité: 30.12.1996 FR 9616190
(71) Demandeur: ALCATEL ALSTHOM COMPAGNIE GENERALE D'ELECTRICITE, 75008 Paris (FR)
(72) Inventeur: Goudeau, Jacques, Claremont, NC 28610-0039 (US); Michaud, Henri Marc, Claremont, NC 28610-0039 (US); Francois, Jean-Philippe, 78230 LE Pecq (FR); Auvray, Thierry, Claremont, NC 28610-0039 (US); Hertz, Michel, c/o Alcatel, 78703 Conflans Cedex (FR); Mc Kenzie, Patrick, c/o Alcatel, 78703 Conflans Cedex (FR)
(74) Mandataire: Buffière, Michelle

(57) **Abrégé**

Le four de fibrage comporte un tube en graphite, vertical, chauffé par induction et soumis intérieurement à une atmosphère inerte, définissant intérieurement une chambre de fibrage.

Il est caractérisé en ce que ledit tube (1) est à double paroi (2, 3), dont la paroi intérieure (2) est poreuse et sépare la chambre Interne (4) d'une chambre périphérique (9) définie entre les parois et soumise à une circulation de gaz inerte diffusant à travers ladite paroi poreuse (2) dans ladite chambre de fibrage (4).

Application : Etirage d'une préforme de fibre optique

## Description

La présente invention concerne le fibrage d'une préforme de fibre optique et porte plus particulièrement sur une four destiné à ce fibrage.

D'une manière générale en tant que telle bien connue en pratique, un tel four est constitué par un tube en graphite disposé verticalement, qui reçoit axialement la préforme par son extrémité supérieure. Ce tube définit ainsi une chambre de fibrage autour de la préforme. La chambre de fibrage ou tout au moins sa partie médiane est chauffée par induction et portée à une température de l'ordre de 2000°C pour l'étirage de l'extrémité inférieure de la préforme. La préforme est avancée axialement dans le tube au fur et à mesure de son étirage pour rester positionnée dans la partie médiane de la chambre de fibrage. On crée généralement en outre un courant de gaz inerte dans la chambre de fibrage, pour protéger le tube des vapeurs de fusion de la préforme et éviter des dépôts sur sa surface intérieure. Ce courant de gaz inerte doit être suffisant pour protéger la surface intérieure du tube de manière efficace. Il risque dans ces conditions d'entraîner des turbulences dans la chambre. Ces turbulences peuvent nuire à l'étirage de la préforme et se traduire alors par une variation du diamètre de la fibre.

Le document DE-A-37 31 347 divulgue un tel four de fibrage à tube graphite vertical, dont la partie médiane est chauffée. Ce tube est muni d'un diaphragme supérieur traversé par la préforme et d'un diaphragme inférieur traversé par la fibre. La chambre de fibrage qu'il définit autour de la préforme est remplie de gaz inerte, par exemple d'argon. L'étanchéité de son extrémité supérieure est assurée par le diaphragme supérieur. Elle peut être réalisée par contact entre la préforme et les bords de l'ouverture de ce diaphragme, mais ce contact risque de déformer la préforme. Elle est donc de préférence réalisée par le diaphragme supérieur traversé sans contact par la préforme et alors muni intérieurement de tuyères d'injection de gaz combustible dirigé radialement sur la préforme et enflammé, qui constitue une barrière d'étanchéité dans l'ouverture du diaphragme. Ces dernières dispositions évitent un courant de gaz inerte et des turbulences dans la chambre de fibrage mais ne sont pas toujours satisfaisantes pour le maintien à l'intérieur de la chambre de fibrage d'une atmosphère inerte suffisante pour la protection de la paroi du tube graphite. Elles sont par ailleurs relativement complexes à réaliser.

La présente invention a pour but d'éviter les inconvénients de la solution connue précitée, en assurant de manière simple et efficace la protection du tube graphite, sans entraîner pour autant des turbulences de gaz de protection à l'intérieur de la chambre de fibrage et nuire à l'étirage de la préforme.

Elle a pour objet un four de fibrage d'une préforme de fibre optique, comportant un tube en graphite positionné verticalement, chauffé par induction et soumis intérieurement à une atmosphère inerte, ledit tube définissant intérieurement une chambre de fibrage et recevant ladite préforme par son extrémité supérieure, caractérisé en ce que ledit tube en graphite est un tube à double paroi, dite paroi intérieure et paroi extérieure respectivement, a sa paroi intérieure en graphite poreux, définit entre ses parois une chambre périphérique autour de la chambre de fibrage et est équipé pour injecter et faire circuler au moins un gaz inerte dans ladite chambre périphérique, qui diffuse à travers ladite paroi intérieure poreuse dans ladite chambre de fibrage.

Ce four peut aussi présenter au moins l'une des caractéristiques additionnelles suivantes :
- il est équipé pour injecter dans ladite chambre périphérique un deuxième gaz spécifique, choisi en fonction de ladite préforme et alors présent avec ladite atmosphère inerte dans ladite chambre de fibrage,
- il est équipé pour injecter également ledit gaz inerte et/ou ledit deuxième gaz spécifique dans ladite chambre de fibrage,
- il comporte un insert tubulaire ou conique en graphite monté dans la partie terminale inférieure de ladite chambre de fibrage pour guider le flux gazeux injecté dans celle-ci.

Les caractéristiques et avantages de la présente invention ressortiront de la description d'un mode de réalisation illustré à titre d'exemple dans le dessin ci-annexé. Dans ce dessin :
- la figure 1 représente un four de fibrage selon l'invention,
- la figure 2 représente le même four précité adapté.

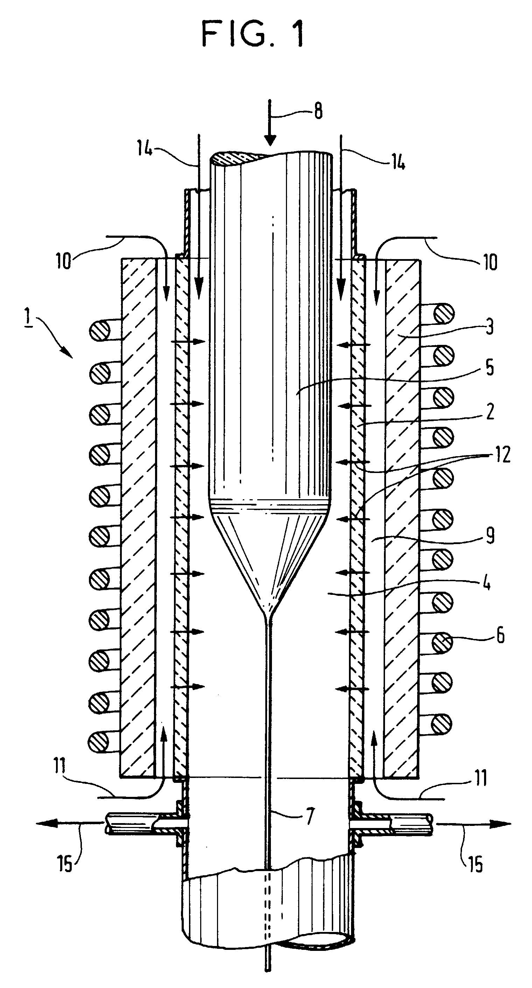

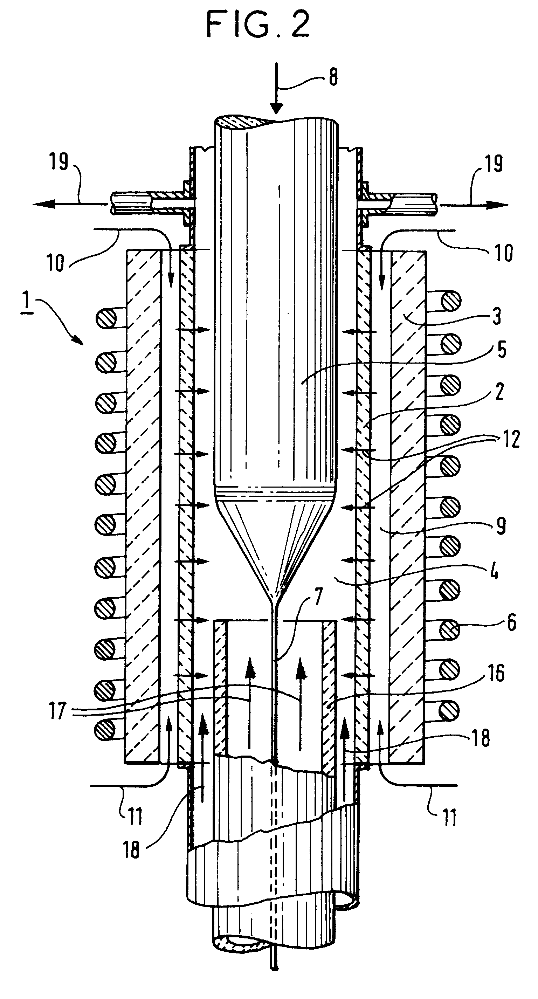

Le four de fibrage selon les figures 1 et 2 comporte un tube en graphite 1 prévu à double paroi, dite paroi intérieure 2 et paroi extérieure 3 respectivement. Il est positionné verticalement. Il définit une chambre interne de fibrage 4, recevant une préforme 5 par l'extrémité supérieure ouverte du tube. Il est chauffé par induction, par une bobine 6 montée sur sa périphérie et traversée par un courant électrique haute fréquence. La partie sensiblement médiane de la chambre de fibrage est ainsi portée à une température de l'ordre de 2000°C pour le ramollissement de la partie inférieure de la préforme et l'étirage de son extrémité inférieure en une fibre 7. Des moyens connus non représentés sont associés à la préforme pour son avance axialement dans la chambre de fibrage, selon la flèche 8, au fur et à mesure de l'étirage de son extrémité inférieure.

Ce four de fibrage à double paroi en graphite selon l'invention a sa paroi intérieure 2 poreuse. Il définit entre ses deux parois 2 et 3 une chambre périphérique 9 autour de la chambre de fibrage 4. Cette chambre périphérique est affectée à la circulation d'un gaz inerte, par exemple d'hélium ou d'argon ou un mélange de ceux-ci, qui diffuse à travers la paroi intérieure 2 et crée une atmosphère inerte dans la chambre de fibrage.

Le gaz inerte ou mélange gazeux inerte est injecté selon les flèches 10 et 11 par une ou des entrées d'injection prévues aux deux extrémités de la chambre périphérique 9. Il peut en variante être injecté par l'une seule des extrémités du tube, par exemple selon la flèche 10, alors que l'autre extrémité est fermée. Il peut lui être associé à souhait un deuxième gaz spécifique, choisi en fonction du type de préforme à fibrer et donc de la fibre résultante, qui est injecté par l'une et/ou les deux extrémités de la chambre périphérique, de préférence de manière indépendante du gaz ou mélange gazeux inerte également injecté dans cette chambre, et vient se mélanger avec ce dernier dans la chambre 9 pour être également alors présent dans la chambre du fibrage 4.

Le flux gazeux injecté et circulant dans cette chambre périphérique 9 diffuse à travers la paroi intérieure poreuse 2 du four selon les flèches telles que 12, en ayant alors un flux réduit à travers celle-ci pour l'obtention de l'atmosphère inerte souhaitée dans la chambre de fibrage et la protection de la face intérieure de la paroi intérieure 2, tout en évitant des turbulences dans la chambre de fibrage et plus particulièrement autour de l'extrémité ramollie et étirée en fibre de la préforme.

L'invention permet ainsi de minimiser le flux de gaz inerte rentrant dans la chambre de fibrage 4, sans avoir à réaliser un réglage très fin du flux de gaz injecté dans la chambre périphérique 9. Le degré de porosité du graphite de la paroi intérieure 2 est choisi pour obtenir et maintenir cette atmosphère inerte sans turbulences dans la chambre de fibrage. La porosité peut être variable le long de la paroi poreuse pour l'obtention d'un flux homogène de gaz inerte le long de la préforme.

Elle permet aussi l'ajout à souhait du deuxième gaz spécifique choisi en fonction de la préforme à fibrer. L'injection de ce gaz spécifique, qui est réalisée dans la chambre périphérique, est rendue très aisée. Elle ne nécessite aucune disposition complexe prévue sur le four pour son injection faite dans la chambre périphérique et pour le contrôle de son propre flux, son mélange avec le ou les gaz inertes et sa teneur résultante dans le ou les gaz inertes. Elle n'entraîne aucune nouvelle turbulence dans la chambre de fibrage. Ce deuxième gaz spécifique est notamment de l'azote, dont l'utilisation dans une chambre de fibrage de préforme est en tant que telle connue.

Ainsi qu'illustré dans les figures 1 et 2, un gaz ou un mélange gazeux inerte peut également être injecté directement dans la chambre de fibrage 4 par l'une de ses parties teminales et en être extrait par sa partie terminale opposée. Les points d'extraction sont reliés à un système d'aspiration extérieur, non représenté, pour créer d'une part une dépression et favoriser l'extraction du flux gazeux et d'autre part extraire avec celui-ci les vapeurs de fusion de la préforme et les poussières qu'elles acheminent et les éliminer vers l'extérieur.

Dans ces conditions, le gaz injecté dans la chambre 9 et diffusant à travers la paroi poreuse 2 crée une couche laminaire de protection de la face intérieure de cette paroi 2, tandis que le flux gazeux injecté directement dans la chambre de fibrage 4 sert essentiellement à véhiculer les vapeurs de fusion et les poussières jusqu'à l'extérieur. Le débit du flux gazeux injecté dans la chambre 4 peut être relativement faible, puisque la protection de la paroi 2 est déjà assurée.

Dans la figure 1, les flèches 14 symbolisent cette injection possible du flux gazeux dans la chambre 4 à son extrémité supérieure et les flèches 15 son extraction à la partie inférieure de cette chambre 4.

Dans la figure 2, le four de fibrage est dit adapté. Il comporte un insert tubulaire ou conique en graphite 16, prévu axialement dans la partie inférieure de la chambre 4, juste au-dessous de la préforme, l'insert tubulaire étant de forme cylindrique ou de forme conique sur au moins une partie de sa longueur, la grande de base de l'insert conique étant située du côté de la préforme. Les flèches 17 et 18 symbolisent l'injection du flux gazeux dans la chambre de fibrage, de part et d'autre de l'insert 16, et les flèches 19 son extraction à la partie supérieure de la chambre de fibrage 4. Le flux gazeux ainsi injecté est guidé par l'insert, avec des débits différents possibles de part et d'autre de celui-ci, de façon à maîtriser son régime d'écoulement.

Le gaz injecté selon les flèches 18, entre l'insert et la paroi poreuse 2, peut provenir de la chambre périphérique et alors résulter de la diffusion à travers la paroi poreuse 2.

Le gaz injecté d'un côté de l'insert peut être différent de celui injecté de l'autre côté ou de celui injecté dans la chambre 9.

Un tel four de fibrage selon la figure 1 ou 2 permet un gain de temps lors des opérations préparatoires de fibrage d'une préforme, l'obtention d'un diamètre de fibre constant tout au long du fibrage, ainsi que l'obtention d'un meilleur rendement et d'un gain de productivité tant par la qualité du fibrage réalisé que du fait du flux réduit de gaz dans la chambre de fibrage. Son surcoût de réalisation se trouve largement compensé par les avantages obtenus.

## Revendications

1. Four de fibrage d'une préforme de fibre optique, comportant un tube en graphite positionné verticalement, chauffé par induction et soumis intérieurement à une atmosphère inerte, ledit tube définissant intérieurement une chambre de fibrage et recevant ladite préforme par l'extrémité supérieure de ladite chambre, caractérisé en ce que ledit tube en graphite (1) est un tube à double paroi, dite paroi intérieure (2) et paroi extérieure (3) respectivement, a sa paroi intérieure en graphite poreux, définit entre ses parois une chambre périphérique (9) autour de la chambre de fibrage (4) et est équipé pour injecter et faire circuler au moins un gaz inerte dans ladite chambre périphérique (9), qui diffuse à travers ladite paroi intérieure poreuse (2) dans ladite chambre de fibrage (4).

2. Four de fibrage selon la revendication 1, caractérisé en ce qu'il comporte au moins une entrée d'injection de gaz dans ladite chambre périphérique, prévue à au moins l'une des extrémités dudit tube.

3. Four de fibrage selon la revendication 2, caractérisé en ce qu'il est équipé pour injecter dans ladite chambre périphérique (9) un deuxième gaz spécifique, choisi en fonction de ladite préforme et alors également présent dans ladite chambre de fibrage.

4. Four de fibrage selon l'une des revendications 1 à 3, caractérisé en ce qu'il est équipé pour également injecter un flux de gaz inerte dans ladite chambre de fibrage (4), par l'une de ses extrémités et l'en extraire par la partie terminale opposée.

5. Four de fibrage selon la revendication 4, caractérisé en ce qu'il comporte un insert tubulaire en graphite (16), de forme cylindrique ou conique sur au moins une partie de sa longueur, monté axialement dans la partie inférieure de ladite chambre de fibrage (4), pour guider le flux de gaz inerte alors injecté dans ladite chambre (4) de fibrage par l'extrémité inférieure de celle-ci et sur au moins d'un des deux côtés de l'insert.
